(19) Europäisches Patentamt
European Patent Office
Office européen des brevets

(11) Veröffentlichungsnummer : **0 167 946**
**B1**

(12) # EUROPÄISCHE PATENTSCHRIFT

(45) Veröffentlichungstag der Patentschrift : **07.06.89**

(51) Int. Cl.⁴ : **C 07 F 9/50**, C 07 F 9/53, C 08 G 79/04, C 08 G 79/06

(21) Anmeldenummer : **85108064.8**

(22) Anmeldetag : **28.06.85**

(54) **Verfahren zur Herstellung aromatischer Phosphorverbindungen.**

(30) Priorität : **10.07.84 DE 3425282**

(43) Veröffentlichungstag der Anmeldung : **15.01.86 Patentblatt 86/03**

(45) Bekanntmachung des Hinweises auf die Patenterteilung : **07.06.89 Patentblatt 89/23**

(84) Benannte Vertragsstaaten : **DE FR GB IT NL**

(56) Entgegenhaltungen :
**DE–A– 3 203 186**
**DE–B– 1 238 024**
**FR–A– 2 366 301**
**THE JOURNAL OF ORGANIC CHEMISTRY, Band 42, Nr. 12, 10. Juni 1977, Seite 2190; G.A. OLAH et al.: "Friedel-crafts type preparation of triphenylphosphine"**
**CHEMICAL ABSTRACTS, Band 52, Nr. 22, 25. November 1958, Nr. 20038a, Columbus, Ohio, US; V.V. KORSHAK et al.: "Organophosphorus polymers. III. Polycondensation of rho-chlorophenyldichlorophosphine with 1,2,-diphenylethane"**
**CHEMICAL ABSTRACTS, Band 87, Nr. 6, 8. August 1977, Seite 33, Nr. 40281v, Columbus, Ohio, US; & JP - A - 77 45 645**

(73) Patentinhaber : **Röhm GmbH**
**Kirschenallee Postfach 4242**
**D-6100 Darmstadt 1 (DE)**

(72) Erfinder : **Ude, Werner, Dr.**
**Birngartenweg 115**
**D-6100 Darmstadt-Arheilgen (DE)**
Erfinder : **Besecke, Siegmund, Dr.**
**Auf dem Kreuzberg 6**
**D-6104 Seeheim-Jugenheim (DE)**
Erfinder : **Riemann, Achim, Dr.**
**Gisselbergerstrasse 2**
**D-3550 Marburg (DE)**
Erfinder : **Schröder, Günther, Dr.**
**Leipziger Strasse 7**
**D-6105 Ober-Ramstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 167 946 B1

Jouve, 18, rue St-Denis, 75001 Paris, France

CHEMICAL ABSTRACTS, Band 83, Nr. 5, 4. August 1975, Seite 519, Nr. 43459n, Columbus, Ohio, US; R.F. DE KETELAERE et al.: "Organophosphorus chemistry. III. Synthesis of some tertiary substituted arylphosphine oxides, sulfides and selenides"
CHEMICAL ABSTRACTS, Band 96, Nr. 1, 4. Januar 1982, Seite 544, Nr. 6000d, Columbus, Ohio, US; L.V. GONCHAROVA et al.: "IR hydroxyl absorption spectra and features of the transfer of electronic effects in solutions of complexes of phenol with aromatic and alkyl-aromatic phosphine sulfides"
CHEMISCHE BERICHTE, Band 102, Nr. 9, 1969, Seiten 2914-2921; H. SCHINDLBAUER et al.: "Die Bestimmung von Substituentenkonstanten phosphorhaltiger Gruppen aus 19F-NMR-Spektren 3-fluor-phenylsubstituierter Organophosphorverbindungen"
CHEMISCHE BERICHTE, Band 102, Nr. 9, 1969, Seiten 2922-2929; W. PRIKOSZOVICH et al.: "Induktiver und mesomerer Effekt phosphorhaltiger Substituenten, bestimmt durch 19F-NMR-Messungen"
E.S.Gould, Mechanismen und Struktur in der organischen Chemie, Verlag Chemie, 1962, Seiten 507-508
Hans Beyer, Lehrbuch der Organischen Chemie, Hirzel-Verlag Leipzig, 5. Aufl. (1958), Seiten 314-315

## Beschreibung

### Gebiet der Erfindung

Phosphorhaltige Polyarylenäther mit wiederkehrenden Einheiten der Struktur

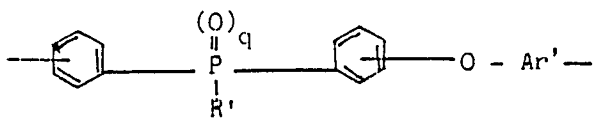

worin R' z. B. Alkyl- oder Arylreste. Ar' eine zweiwertige aromatische Gruppe und q = 0 oder 1 ist, sind aus der DE-OS 32 03 186 als schwer- oder unbrennbare, hochtemperaturbeständige Kunststoffe von hoher Erweichungstemperatur bekannt.

Die vorliegende Erfindung betrifft ein neues Verfahren zur Herstellung monomerer Ausgangsverbindungen zu diesen Polyarylenäthern. Es handelt sich um eine sogenannte Friedel-Crafts-Reaktion.

### Stand der Technik

Nach der schon erwähnten DE-OS 32 03 186 sind die dort genannten Polyarylenäther z. B. durch die Umsetzung äquimolarer Mengen Di(fluorphenyl)-phenylphosphinoxid und eines aromatischen Diols, wie Dioxydiphenyläther, durch Abspaltung von Fluorwasserstoff in Gegenwart einer Base zugänglich. Die Herstellung des Di(fluorphenyl)-phenylphosphinoxids oder analoger Ausgangsverbindungen erfolgt durch Umsetzung eines bromierten Aromaten über dessen Grignardverbindung mit Dichlorphenylphosphin oder -phosphinoxid in Äther als Lösungsmittel, z. B. nach dem Schema

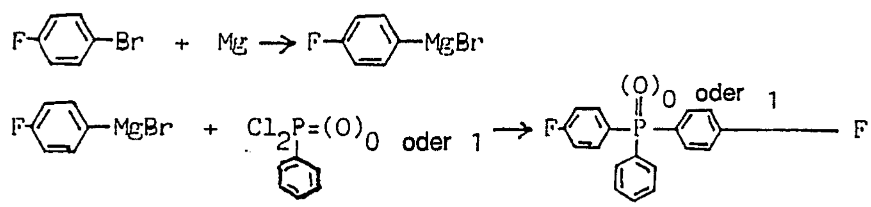


Die Herstellung einer Bindung zwischen einem Phosphoratom und einem aromatischen Kern durch eine Grignard-Reaktion ist jedoch für ein technisches Verfahren aus mehreren Gründen wenig geeignet. Zu diesen Gründen gehören die Notwendigkeit, teure Bromverbindungen, Äther und metallisches Magnesium einzusetzen, die hohe Empfindlichkeit der Reaktion und die durch den Einsatz von Äther bedingte Feuergefahr, sowie die Gefahr der Bildung explosibler Peroxide.

Es ist auch bekannt, eine Aromaten-Phosphor-Bindung durch eine Friedel-Crafts-Reaktion zu erzeugen. V. V. Korschak (Isvestija Akademi Nauk SSSR, Otdel. Chim. 1958, S. 595-601) setzte p-Chlorphenyl-dichlorphosphin mit Dibenzyl in Gegenwart von Aluminiumchlorid zu oligomeren Verbindungen mit wiederkehrenden Einheiten der Struktur

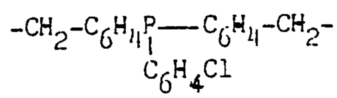

um. Diese Oligomeren haben nicht die erwünschte Polyätherstruktur, wie eingangs dargestellt, noch eignen sie sich als Vorprodukte zur Herstellung solcher Polyäther.

Nach DE-AS 1 238 024 werden arylierte Phosphorthioverbindungen aus Trichlorphosphinsulfid oder dessen Abkömmlingen, in denen ein oder zwei Chloratome durch organische Reste ersetzt sind, und Aromaten in Gegenwart von Aluminiumchlorid oder anderen Friedel-Crafts-Katalysatoren hergestellt, wobei die in dem eingesetzten chlorierten Phosphinsulfid enthaltenen Chloratome durch aromatische Kerne ersetzt werden. Auf diesem Wege wurden jedoch nicht die Ausgangsstoffe hergestellt, aus denen gemäß DE-OS 32 03 186 phosphorhaltige Polyarylenäther herstellbar sind.

G. Olah und D. Hehemann (J. Org. Chem., Vol. 42, 1977, S. 2190) haben gefunden, daß sich Phosphortrichlorid in Gegenwart von Schwefel und Friedel-Crafts-Katalysatoren mit Aromaten in guter Ausbeute zu Triarylphosphinsulfiden umsetzen läßt. welche mit Reduktionsmitteln in die entsprechenden Triarylphosphine umsetzbar sind.

### Aufgabe und Lösung

Die Erfinder haben sich die Aufgabe gestellt, Vorprodukte zur Herstellung phosphorhaltiger Polyarylenäther der eingangs angegebenen Struktur, die ein an zwei aromatische Kerne gebundenes

Phosphoratom enthalten und nach bekannten Verfahren zu den phosphorhaltigen Polyarylenäthern umsetzbar sind, in guter Ausbeute aus preisgünstigen Ausgangsstoffen in einem technisch gut beherrschbaren Verfahren herzustellen.

Im engeren Sinne bestand die Aufgabe darin, Verbindungen der Formel I

$$X - Ar - \underset{\displaystyle R}{\underset{|}{\overset{\displaystyle S}{\overset{\|}{P}}}} - Ar - X$$

worin R ein niederer Alkyl- oder Arylrest,
Ar ein Arylenrest und
X Halogen ist
in der erwähnten vorteilhaften Weise herzustellen.

Die Formel I repräsentiert Vorprodukte, die unmittelbar — oder gegebenenfalls nach einer weiteren Umsetzung — zu phosphorhaltigen Polyarylenäthern umgesetzt werden können. Weiterhin kann ein Teil der so herstellbaren Produkte auch zu phosphorhaltigen Polyarylenestern umgesetzt werden, z. B. gemäß DE-OS 32 31 331 oder 32 28 571. Wenn X z. B. Fluor ist, so lassen sich die Verbindungen

$$Hal - Ar - \underset{\displaystyle R}{\underset{|}{\overset{\displaystyle S}{P}}} - Ar - Hal$$

mit Bisphenolen zu Polyarylenäthern kondensieren.

Es wurde nun gefunden, daß sich Verbindungen der Formel I aus einer Verbindung $R\text{-}PCl_2$ durch Umsetzung mit Aromaten der Formel H-ArX in Gegenwart eines Friedel-Crafts-Katalysators auf einfache Weise in einer sicher beherrschbaren Reaktion in guter Ausbeute herstellen lassen. Die Verbindungen der Formel I sind neue Stoffe.

Der Rest R des als Ausgangsverbindung eingesetzten Dichlorphosphins $R\text{-}PCl_2$ kann ein niederer Alkylrest sein, der nicht mehr als 4 C-Atome enthält. Methylgruppen sind bevorzugt. Vorteilhafter ist R ein Arylrest, insbesondere ein unsubstituierter Phenylrest.

Die Dichlorphosphine $R\text{-}PCl_2$ sind bekannt und durch Friedel-Crafts-Arylierung der entsprechenden Phosphortrichloride oder deren Umsetzung mit Alkylhalogeniden herstellbar.

Die aromatische Verbindung H-Arx

enthält in der Regel eine in ortho- oder bevorzugt para-Stellung unsubstituierte Phenylgruppe. Obwohl sie weitere Substituenten, wie Alkylreste, Alkoxygruppen, Halogenatome oder Nitrogruppen tragen kann. sind unsubstituierte Phenylgruppen bevorzugt. Mehrkernige aromatische Reste, wie Naphthylengruppen, kommen ebenfalls in Betracht.

Unter den Substituenten X sind Chlor und Fluor bevorzugt. Die wichtigsten Vertreter der Verbindungen H-ArX sind Fluorbenzol und Chlorbenzol. Obwohl diese Verbindungen mehrere Wasserstoffatome an aromatischen Kern tragen, wird bei der Friedel-Crafts-Reaktion in der Regel nur eines davon durch eine P-C-Bindung ersetzt.

Die Friedel-Crafts-Reaktion

wird mit sog. Friedel-Crafts-Katalysatoren durchgeführt, die als solche bekannt sind, vgl Houben-Weyl, Bd. 7/20, S. 15-19 und die dort zitierte Literatur. Es handelt sich vor allem um bestimmte wasserfreie Metallhalogenide, wie beispielsweise Zinntetrachlorid, Aluminiumchlorid oder Eisenchlorid. Charakteristisch ist eine Elektronenlücke am Metallatom, welche die Voraussetzung für die hohe Reaktionsfähigkeit gegenüber den Chloratomen der Dichlorphosphinverbindung ist. Daneben zählen zu den Friedel-Crafts-Katalysatoren jedoch auch Säuren, wie Polyphosphorsäure oder Schwefelsäure oder Metalle wie Eisen. Wasserfreies Aluminiumchlorid ist bevorzugt. Es wird, ebenso wie die meisten anderen Friedel-Crafts-Katalysatoren im stöchiometrischen Verhältnis 1 : 1 oder im überschuß bis zu 10 : 1 zu den umzusetzenden Chloratomen des Phosphinchlorids eingesetzt. Es gibt auch Friedel-Crafts-Katalysatoren, die in unterstöchiometrischer Menge wirksam sind.

Die Umsetzung findet in einem wasserfreien polaren Medium statt. Geeignet sind u. a. Schwefelkohlenstoff, Nitrobenzol und Nitropropan. Chlorbenzol oder Fluorbenzol können gleichzeitig als Reaktionspartner und — im Überschuß eingesetzt — als Reaktionsmedium dienen.

Zur Bildung monomerer Verbindungen der Formel I ist stöchiometrisch ein Molverhältnis der Verbindungen $R\text{-}PCl_2$ und H-ARX von 1 : 2 erforderlich, das aber, um eine vollständige Umsetzung der

Dichlorphosphinverbindung zu erreichen, zugunsten der aromatischen Verbindung überschritten werden kann. Vorteilhaft sind Molverhältnisse zwischen 1 : 2 und 1 : 4.

Die Reaktion läuft bei Temperaturen zwischen 50 und 300, vorzugsweise 70 und 250 °C in 0.5 bis 30 Stunden ab. Beim Temperaturen bzw. Reaktionszeiten im unteren Teil der angegebenen Bereiche sind besonders bevorzugt. Der Schwefel wird zweckmäßig in einer Menge von 1 bis 1,5 pro Mol der Dichlorphosphinverbindung eingesetzt. Unter den genannten Bedingungen sind Ausbeuten von 50 bis etwa 90 %, bezogen auf die eingesetzte Dichlorphosphinverbindung erreichbar. Das Reaktionsgemisch wird, wie bei Friedel-Crafts-Verfahren üblich, durch Eingießen in Eiswasser oder konzentrierte Salzsäure aufgearbeitet, wobei sich das gebildete Kondensationsprodukt als unlösliche Masse abscheidet.

Die bevorzugten phosphorhaltigen Polyarylenäther gemäß DE-OS 32 03 186 enthalten den Phosphor in Form von Phosphinoxid-Gruppen. Diese entstehen beim Verfahren der Erfindung unmittelbar nur bei der weniger bevorzugten Ausführungsform, bei der eine Dichlorphosphinoxidverbindung eingesetzt wird. Das gleiche gilt für die monomeren Reaktionsprodukte der Formel I. Die Verbindungen vom Phosphinsulfidtyp sind zwar beim Verfahren der Erfindung leichter herstellbar als die Verbindungen vom Phosphinoxydtyp, jedoch sind die technischen Eigenschaften der daraus herstellbaren Polyarylenester oder -äther weniger vorteilhaft. Es wird daher bevorzugt, die beim Verfahren der Erfindung entstehenden Verbindungen vom Phosphinsulfidtyp, die aus den entsprechenden Ausgangsverbindungen oder in Gegenwart von Schwefel entstehen, nachträglich zu den besonders stabilen Verbindungen vom Phosphinoxidtyp umzusetzen. Das geschieht bei den Verbindungen vom Phosphintyp durch Hydrolyse bevorzugt unter basischen Bedingungen.

## Beispiele 1 und 2

17,9 g (0,1 Mol) Phenylphosphindichlorid, 3,2 g (0,1 Mol) Schwefel, 0,2 g wasserfreies Aluminiumchlorid und 0,67 Mol Chlorbenzol oder Fluorbenzol wurden in einem 250 ml-4-Halskolben mit Rührer, Rückflußkühler, Innenthermometer und Abgasleitung so lange gerührt, bis der Schwefel in Lösung gegangen war. Anschließend gab man 70,9 g (etwa 0,5 Mol) wasserfreies Aluminiumchlorid dazu. Die Reaktionsmischung wurde nun 8 h zum Rückfluß erhitzt. — Nach dem Abkühlen trug man den Ansatz langsam in 500 ml eines Gemisches aus konzentrierter Salzsäure und Eis ein und rührte anschließend 1,5 h bei Raumtemperatur. Anschließend filtrierte man von ausgefallenen Festprodukten ab, trennte die organische Phase des Filtrats ab und extrahierte die wäßrige Phase 5 mal mit je 200 ml Toluol. Die vereinigten organischen Phasen wurden mit Natriumsulfat getrocknet und im Wasserstrahlvolumen bei 70 °C eingeengt. Der zähe Rückstand wurde im Ölpumpenvakuum fraktioniert destilliert. Bei etwa 260-300 °C ging ein Isomerengemisch von disubstituierten Triphenylphosphinsulfiden über.

| Bsp. | eingesetzter Aromat | dest. Ausbeute (g) | $^{31}$P-NMR-Signal*) des Hauptprodukts (δ) | Bezeichnung des Produkts |
|---|---|---|---|---|
| 1 | Chlorbenzol | 26,6 | 41,92 | Di-chlorphenyl-phenylphosphin-sulfid |
| 2 | Fluorbenzol | 20,7 | 41,75 | Di-fluorphenyl-phenylphosphin-sulfid |

*) in $CDCl_3$ mit $H_3PO_4$-Kapillare.

## Beispiele 3 und 4

3,2 g (0,1 Mol) Schwefel, 71,1 g (0,5 Mol) Aluminiumchlorid, wasserfrei und 0,5 Mol des in der Tabelle angegebenen Aromaten wurden in einem 250 ml-4-Halskolben mit Rührer, Rückflußkühler, Tropftrichter und Innenthermometer vorgelegt. Hinzu tropfte man langsam unter Kühlung eine lösung aus 11,7 g (0,1 Mol) Methylphosphonsäurechlorid in 0,4 Mol des Aromaten.

Danach wurde die Reaktionsmischung zum Rückfluß erhitzt. (Reaktionszeiten siehe Tabelle). Der Ansatz wurde anschließend in 500 ml eines Salzsäure/Eis-Gemisches gegeben und 1,5 h bei Raumtemperatur gerührt. Das Gemisch wurde abgesaugt und die organische Phase abgetrennt. Die zurückbleibende wäßrige Phase wurde 5 mal mit je 200 ml Toluol extrahiert. Nach der Vereinigung wurden die organischen Phasen mit $Na_2SO_4$ getrocknet und die Lösungsmittel soweit wie möglich im Wasserstrahlvakuum bei

etwa 70 °C abdestilliert. Der Rückstand wurde bei etwa 0,2 mbar fraktioniert destilliert. Das Produkt ging bei etwa 240-290 °C über.

| Bsp. | einges. Aromat | Reaktions-zeit (h) | Produkt (g) | $^{31}$-NMR-Signal*) d. Hauptprodukts (δ) | Bezeichnung des Produkts |
|---|---|---|---|---|---|
| 3 | Fluorbenzol | 24 | 19,7 | 42,05 | Dichlordiphenyl-methylphosphin-sulfid |
| 4 | Chlorbenzol | 8 | 21,6 | 41,51 | Difluordiphenyl-methylphosphin-sulfid |

*) in $CDCl_3$ mit $H_3PO_4$-Kapillare.

Beispiel 5

57,4 g (0,6 Mol) Fluorbenzol und 17,9 g (0,1 Mol) Dichlorphenylphosphin, 43,9 g wasserfreies Aluminiumchlorid (0,33 Mol) und 32 mg Schwefel wurden in einem 0,35 l Roth-Autoklav mit Hastelloy C-Auskleidung, Magnetführung und Elektroheizung auf ca. 200 °C erhitzt. Die Innentemperatur stieg aufgrund der zunächst offensichtlich stark exothermen Reaktion kurzzeitig auf 220 °C. Der Reaktionsansatz wurde 2 h bei 200 °C gehalten. Danach wurde auf Raumtemperatur abgekühlt und der Autoklav entspannt. Die Reaktionslösung wurde mit 250 ml Toluol in einem Kolben gespült, mit 26 g KCl versetzt und 30 min bei 90 °C gerührt. Nach dem Abkühlen auf Raumtemperatur wurde der Ansatz unter Eiswasserkühlung in 250 ml 10 %ige Salzsäure eingetragen, mit wenig Wasser nachgewaschen und 60 min bei Raumtemperatur gerührt. Anschließend wurde filtriert und die zurückbleibende Festsubstanz mit insgesamt 800 ml Dichlormethan gewaschen.

Die organische Phase des Filtrats wurde abgetrennt, die wäßrige Phase 4 mal mit je 300 ml Methylenchlorid ausgewaschen. Die vereinigten organischen Phasen wurden mit $Na_2SO_4$ getrocknet, das Lösungsmittel soweit wie möglich am Rotationsverdampfer bei 60 °C abgezogen und der Rückstand im Ölpumpenvakuum fraktioniert destilliert. Man erhielt 12 g eines bräunlichen hochviskosen Destillats, das größtenteils aus Difluortriphenylphosphinoxiden besteht.

Mikroanalyse :

| | | | |
|---|---|---|---|
| theor. | 70,7 C | 4,5 H | 9,4 P |
| gef. | 71,1 C | 5,1 H | 9,3 P |

$^{31}$P-chem. Verschiebung des Hauptprodukts : 29,20 = δ.

## Patentansprüche

1. Verfahren zur Herstellung von Verbindungen der Formel I

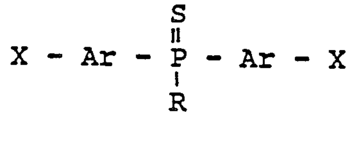

(I)

durch Umsetzung einer Verbindung R-$PCl_2$ mit einer Verbindung H ArX in Gegenwart eines Friedel-Crafts-Katalysators und von elementarem Schwefel, dadurch gekennzeichnet, daß man als Verbindungen R-$PCl_2$ bzw. H ArX solche Verbindungen einsetzt, in denen
R einen niederen Alkylrest mit nicht mehr als 4 C-Atomen oder einen Arylrest
Ar einen Arylenrest und
X ein Halgenatom bedeuten.

2. Verfahren nach Anspruch 1, dadurch gekennzeichnet, daß man 1 Mol der Verbindung R-$PCl_2$ mit mehr als 1 Mol der Verbindung H-ArX umsetzt.

3. Verfahren nach Anspruch 2, dadurch gekennzeichnet, daß man 1 Mol der Verbindung R-$PCl_2$ mit wenigstens 2 Mol der Verbindung H-ArX umsetzt.

4. Verfahren nach den Ansprüchen 1 bis 3, dadurch gekennzeichnet, daß man eine Verbindung H-ArX einsetzt, in der HAr ein vorzugsweise unsubstituierter Phenylrest ist.

5. Verfahren zur Herstellung einer polymeren Phosphorverbindung mit wiederkehrenden Einheiten der Struktur

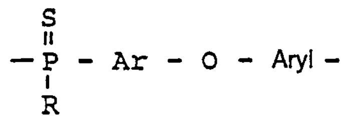

dadurch gekennzeichnet, daß man 1 Mol der Verbindung R-$PCl_2$ mit höchstens 1 Mol der Verbindung H-ArX, worin X = O-Aryl ist und Aryl einen aromatischen Rest bedeutet, in Gegenwart von Friedel-Crafts-Katalysatoren und von elementaren Schwefel umsetzt.

6. Verfahren zur Herstellung einer polymeren Phosphorverbindung mit wiederkehrenden Einheiten

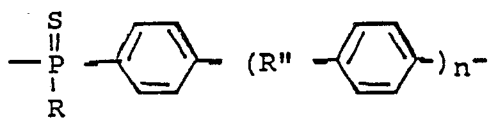

worin R" eine kovalente Einfachbindung, ein Sauerstoff- oder Schwefelatom, eine Carbonyl-, Sulfonyl-, Methylen- oder Isopropylidengruppe oder die Gruppe

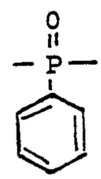

und n eine zahl von wenigstens 1 bedeuten, dadurch gekennzeichnet, daß man 1 Mol der Verbindung R-$PCl_2$ mit höchstens 1 Mol der Verbindung

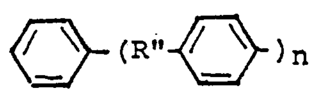

in Gegenwart eines Friedel-Crafts-Katalysators und von elementarem Schwefel umsetzt.

7. Verfahren nach Anspruch 6, dadurch gekennzeichnet, daß als Verbindung

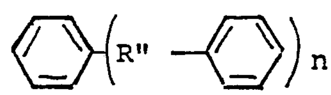

eine Verbindung aus der Gruppe

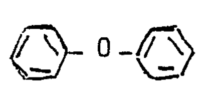 , 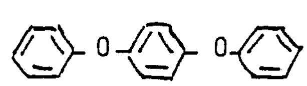 oder

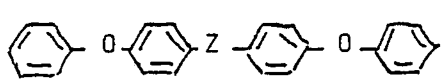

worin Z eine der Gruppen Sauerstoff, Schwefel, Carbonyl, Sulfonyl oder

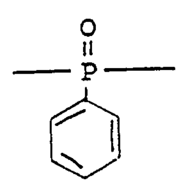

darstellt, eingesetzt wird.

8. Verfahren nach den Ansprüchen 1 bis 7, dadurch gekennzeichnet, daß man eine Verbindung $R\text{-}PCl_2$ umsetzt, in der R = Methyl oder vorzugsweise Phenyl ist.

9. Verfahren zur Herstellung von Verbindungen der Formel II

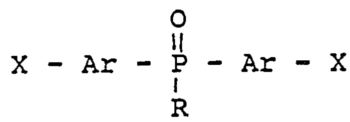 (II)

worin R, Ar und X die im Anspruch 1 angegebene Bedeutung haben, dadurch gekennzeichnet, daß man gemäß Anspruch 1 eine Verbindung der Formel I herstellt und diese durch Hydrolyse zu einer Verbindung der Formel II umsetzt.

## Claims

1. Process for the preparation of compounds of the formula I

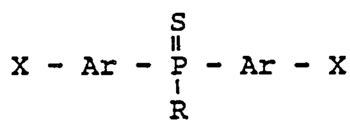 (I)

by reacting a compound $R\text{-}PCl_2$ with a compound H ArX in the presence of a Friedel-Crafts catalyst and of elemental sulphur, characterised in that those compounds are used for compounds $R\text{-}PCl_2$ or H ArX in which

R denotes a lower alkyl radical having not more than 4 C-atoms or an aryl radical
Ar denotes an arylene radical and
X denotes a halogen atom.

2. Process according to claim 1, characterised in that 1 mole of the compound $R\text{-}PCl_2$ is reacted with more than 1 mole of the compound H-ArX.

3. Process according to claim 2, characterised in that 1 mole of the compound $R\text{-}PCl_2$ is reacted with at least 2 moles of the compound H-ArX.

4. Process according to claims 1 to 3, characterised in that a compound H-ArX is used in which HAr is a preferably unsubstituted phenyl radical.

5. Process for the preparation of a polymeric phosphorus compound having repeating units of the structure

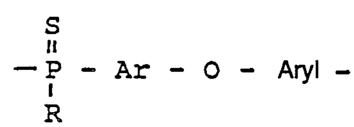

characterised in that 1 mole of the compound $R\text{-}PCl_2$ is reacted with at most 1 mole of the compound H-ArX, in which X is O-aryl and aryl denotes an aromatic radical, in the presence of Friedel-Crafts catalysts and of elemental sulphur.

6. Process for the preparation of a polymeric phosphorus compound having repeating units

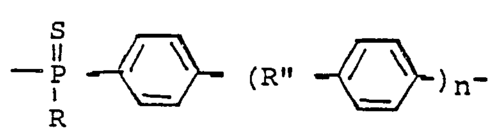

in which R″ denotes a covalent single bond, an oxygen atom or sulphur atom, a carbonyl, sulphonyl, methylene or isopropylidene group or the group

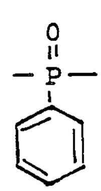

and n denotes a number of at least 1, characterised in that 1 mole of the compound $R\text{-}PCl_2$ is reacted with at most 1 mole of the compound

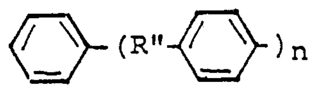

in the presence of a Friedel-Crafts catalyst and of elemental sulphur.

7. Process according to claim 6, characterised in that for the compound

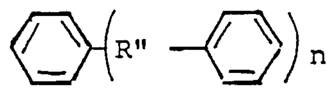

a compound from the group

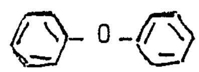 , 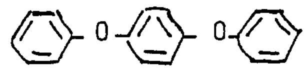 or

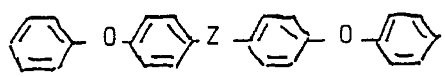

in which Z is one from the group oxygen, sulphur, carbonyl, sulphonyl or

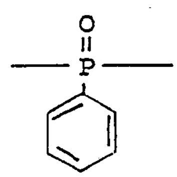

is used.

8. Process according to claims 1 to 7, characterised in that a compound $R\text{-}PCl_2$ is used in which R is methyl or preferably phenyl.

9. Process for the preparation of compounds of the formula II

$$X - Ar - \overset{\overset{\displaystyle O}{\|}}{\underset{\underset{\displaystyle R}{|}}{P}} - Ar - X \qquad (II)$$

in which R, Ar and X have the meaning given in claim 1, characterised in that a compound of the formula I is prepared according to claim 1 and this compounds is converted by hydrolysis to give a compound of the formula II.

## Revendications

1. Procédé de préparation de composés de formule I

$$X - Ar - \overset{\overset{\displaystyle S}{\|}}{\underset{\underset{\displaystyle R}{|}}{P}} - Ar - X \qquad (I)$$

par réaction d'un composé $R\text{-}PCl_2$ avec un composé H-ArX en présence d'un catalyseur de Friedel-Crafts et de soufre élémentaire, caractérisé en ce qu'on utilise, comme composés $R\text{-}PCl_2$ et H-ArX, des composés dans lesquels

R représente un reste alkyle inférieur ne comportant pas plus de 4 atomes de carbone ou un reste aryle,

Ar représente un reste arylène et

X représente un atome d'halogène.

2. Procédé selon la revendication 1, caractérisé en ce qu'on fait réagir 1 mol du composé $R\text{-}PCl_2$ avec plus de 1 mol du composé H-ArX.

3. Procédé selon la revendication 2, caractérisé en ce qu'on fait réagir 1 mol du composé $R\text{-}PCl_2$ avec au moins 2 mol du composé H-ArX.

4. Procédé selon l'une quelconque des revendications 1 à 3, caractérisé en ce qu'on utilise un composé H-ArX dans lequel HAr est un reste phényle, de préférence non substitué.

5. Procédé de préparation d'un composé du phosphore polymère contenant des motifs répétitifs de formule

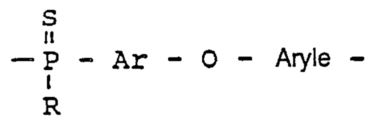

caractérisé en ce qu'on fait réagir 1 mol du composé R-$PCl_2$ avec 1 mol au maximum du composé H-ArX, dans lequel X = O-aryle et Aryle représente un reste aromatique, en présence de catalyseurs de Friedel-Crafts et de soufre élémentaire.

6. Procédé de préparation d'un composé du phosphore polymère contenant des unités répétitives de formule

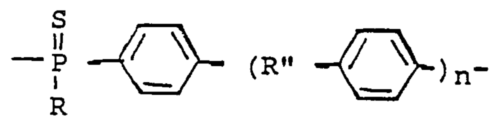

dans laquelle R″ est une liaison simple covalente, un atome d'oxygène ou de soufre, un groupement carbonyle, sulfonyle, méthylène ou isopropylidène ou le groupement

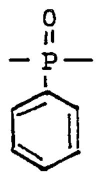

et n est un nombre d'au moins 1, caractérisé en ce qu'on fait réagir 1 mol du composé R-$PCl_2$ avec 1 mol au maximum du composé

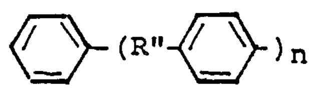

en présence d'un catalyseur de Friedel-Crafts et de soufre élémentaire.

7. Procédé selon la revendication 6, caractérisé en ce qu'on utilise, en tant que composé

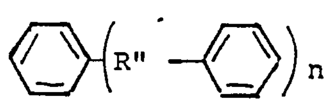

un composé du groupe

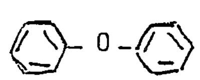
,
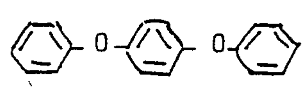
ou

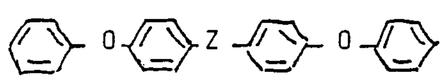

Z représentant un atome d'oxygène, de soufre ou l'un des groupements carbonyle, sulfonyle ou

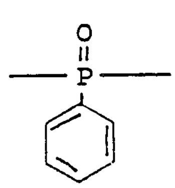

8. Procédé selon l'une quelconque des revendications 1 à 7, caractérisé en ce qu'on fait réagir un composé R-$PCl_2$ dans lequel R = méthyle ou, de préférence, phényle.

9. Procédé de préparation de composés de formule

$$X - Ar - \overset{\displaystyle O}{\overset{\|}{\underset{\underset{\displaystyle R}{|}}{P}}} - Ar - X \qquad (II)$$

dans laquelle R, Ar et X ont les significations données dans la revendication 1, caractérisé en ce qu'on prépare un composé de formule I conformément à la revendication 1 et on le transforme par hydrolyse en un composé de formule II.